# EUROPÄISCHE PATENTANMELDUNG

(11) **EP 3 896 041 A1**
(43) Veröffentlichungstag der Anmeldung: **20.10.2021**
(21) Anmeldenummer: 21169192.8
(22) Anmeldetag: 19.04.2021
(51) Int. Cl.: C03C 17/00, C03C 17/25

(54) **BESCHICHTUNG UND VERFAHREN ZUM AUFBRINGEN EINER BESCHICHTUNG AUF EINE GLASOBERFLÄCHE**

(30) Priorität: 17.04.2020 DE 102020110567; 24.02.2021 DE 202021100905 U
(71) Anmelder: Mursall Active Coating GmbH, 5411 Oberalm (AT)
(72) Erfinder: Kummerer, Robert, 5400 Hallein (AT)
(74) Vertreter: Mollekopf, Gerd Willi

(57) **Zusammenfassung**

Es wird ein Verfahren zum Aufbringen einer Beschichtung auf eine Glasoberfläche (4) vorgeschlagen. Ein erster Schritt umfasst das Vorbehandeln der Glasoberfläche (4) mit einem alkalischen Reinigungsmittel auf, der insbesondere einen pH-Wert von zumindest 9 aufweist. Ein zweiter Schritt umfasst das Spülen der Glasoberfläche (4) mit Wasser. Ein dritter Schritt umfasst das Auftragen eines Ausgangsmaterials, das zumindest dotierte Halbleiterpartikel enthält, auf die Glasoberfläche (4). Ein vierter Schritt umfasst die Aushärtung des Ausgangsmaterials auf der Glasoberfläche (4) zu einer Beschichtung (6).

## Beschreibung

Die Erfindung betrifft eine Beschichtung und ein Verfahren zur Aufbringung einer Beschichtung auf eine Glasoberfläche.

Das Aufbringen von Beschichtungen auf eine Glasoberfläche kann der Glasoberfläche gezielte Eigenschaften verleihen. Insbesondere Beschichtungen, die einen Photokatalysator aufweisen, eignen sich auf einer Glasoberfläche, die einem Lichteinfall besonders exponiert ist.

Die europäische Patentanmeldung EP 2 695 663 A1 schlägt ein Verfahren zur Feinstaubreduktion unter Einsatz eines Photokatalysators sowie einen Photokatalysator vor, der auch in Abwesenheit von UV-Licht aktiv ist.

Aufgabe der Erfindung ist es, eine stabile Beschichtung auf einer Glasoberfläche und ein Verfahren zum Aufbringen einer stabilen Beschichtung auf eine Glasoberfläche vorzuschlagen, sowie eine nach dem Verfahren hergestellte Beschichtung bzw. ein Glas mit einer solchen Beschichtung.

Die Aufgabe wird mit den Merkmalen der Ansprüche 1 bzw. 5 gelöst. Vorteilhafte Ausgestaltungen sind Gegenstand von Unteransprüchen.

Gemäß Anspruch 1 wird eine Beschichtung auf einer Glasoberfläche, insbesondere zur photokatalytischen Umsetzung von Luftverunreinigungen bereitgestellt, wobei die Beschichtung aus einem Ausgangsmaterial, das zumindest dotierte oder zumindest teilweise dotierte Partikel, insbesondere Halbleiterpartikel und/oder photokatalytisch aktive Partikel, enthält, gebildet ist, und wobei die Beschichtung durch Vernetzung der Partikel mit dem Silizium oder dem Siliziumdioxid der Glasoberfläche mit der Glasoberfläche auf molekularer Ebene verbunden ist. Somit bewirkt die Beschichtung eine Reinigung der Luft, die mit der beschichteten Oberfläche in Kontakt kommt. Gemäß Anspruch 5 weist ein Verfahren zum Aufbringen einer Beschichtung auf eine Glasoberfläche folgende Schritte auf: Das Vorbehandeln der Glasoberfläche mit einem alkalischen Reinigungsmittel, welches insbesondere einen pH-Wert von zumindest 9 aufweist. Das Spülen der Glasoberfläche mit Wasser. Das Auftragen eines Ausgangsmaterials, welches zumindest dotierte oder zumindest teilweise dotierte Partikel, insbesondere Halbleiterpartikel und/oder photokatalytisch aktive Partikel, enthält, auf die Glasoberfläche, und das Aushärten des Ausgangsmaterials auf der Glasoberfläche zu einer Beschichtung.

Unter "Beschichtung" wird eine festhaftende Schicht verstanden, die durch das Aufbringen eines formlosen Stoffes auf eine Oberfläche erzeugt wird.

Unter Glasoberfläche wird die Oberfläche eines Glases verstanden. Dieses Glas ist insbesondere ein silikatisches Glas oder ein Quarzglas oder ein Kalk-Natron-Glas. Vorzugsweise weist das Glas zumindest 40 Gewichts% oder zumindest 70 Gewichts% Siliziumdioxid auf. Das Glas kann eine oder mehrere weitere Komponenten aufweisen, welche eine oder mehrere der folgenden sein können: Oxide, Aluminiumoxid, Natriumoxid, Kaliumoxid, Magnesiumoxid, Calciumoxid, Alkalioxide. Bevorzugt ist das Glas Bauglas oder Flachglas oder Silikatglas.

Unter "Reinigungsmittel" wird ein Verbrauchsstoff zur Reinigung von Objekten durch Entfernen von Verunreinigungen verstanden. Vorteilhaft ist dieses alkalisch und liegt vorzugsweise in wässriger Lösung vor. Häufig weisen alkalische Reiniger zumindest eine der Grundkomponenten auf oder besteht aus einer dieser Grundkomponenten, welche eine oder mehrere der folgenden sein können: Alkalihydroxide, Alkalikarbonate, Phosphate, Borax, Silikate und Cyanide. Diese Grundkomponenten des Reinigers können in reiner Form oder beliebig mit einem Verdünnungsmittel und/oder in beliebiger Weise kombiniert im Reinigungsmittel enthalten sein.

Alkalische Reinigungsmittel weisen eine reinigende Wirkung insbesondere dadurch auf, dass sich negativ geladene OH- Ionen sowohl am Schmutz als auch an einer zu reinigenden Oberfläche anlagern, welche sich dadurch elektrostatisch abstoßen. Weiterhin können Öle und Fette durch alkalische Reinigungsmittel in einer Verseifungsreaktion in wasserlösliche Seifen umgewandelt werden.

Das alkalische Reinigungsmittel ist hochalkalisch und weist einen pH-Wert von mindestens 9, vorzugsweise von mindestens 10 auf. Das Reinigungsmittel dient einer Präparation der Glasoberfläche, insbesondere durch ein Aufbrechen von Siliziumdioxid-Bindungen der Glasoberfläche, wodurch eine spätere Verbindung der Glasoberfläche mit der Beschichtung, insbesondere eine molekulare Bindung, begünstigt wird. Das alkalische Reinigungsmittel ist beispielsweise eine Ammoniaklösung oder Natronlauge mit einem pH-Wert größer gleich 9, vorzugsweise größer gleich 10.

Der Schritt des Spülens der Glasoberfläche dient insbesondere der Entfernung von Rückständen auf der Glasoberfläche sowie von Resten des alkalischen Reinigungsmittels.

### Partikel

Bei der hierin beschriebenen Beschichtung und den hierin beschriebenen Verfahren werden Partikel, insbesondere Halbleiterpartikel und/oder photokatalytisch aktive Partikel, eingesetzt wie im Folgenden beschrieben.

In einer Ausführung liegen die Partikel in dem Ausgangsmaterial in Form von Nanopartikeln vor. Unter "Nanopartikel" werden Teilchen verstanden, deren drei Außenmaße jeweils im nanoskaligen Bereich, also im Bereich von 1 nm bis 100 nm liegen. Vorzugsweise haben die Partikel eine Größe im Bereich von 50 nm bis 1 µm, 70 bis 800 nm, 150 bis 900 nm, 300 bis 700 nm oder 450 bis 750 nm. Die Partikelgröße ist vorzugsweise nach Äquivalentdurchmesser bestimmt. Die Partikelgröße kann eine statistische Streuung der Partikelgröße aufweisen. Wenn angegeben ist, dass die Größe der Partikel in dem angegebenen Bereich liegt, bedeutet dies, dass die meisten der Partikel in dem Größenbereich liegen. Beispielsweise mindestens 80%, 90%, 95% oder 98% der Partikel haben eine Größe wie angegeben.

Vorteilhaft sind die Partikel Titanoxid-Partikel, Zinkoxid-Partikel, oder Siliziumoxid-Partikel oder weisen dies auf. Bevorzugt sind die Partikel ein Gemisch aus ZnO- und TiO-Partikeln. Besonders bevorzugt sind die Partikel aus Titanoxid oder ausschließlich aus Titandioxid. Weiter bevorzugt sind die Partikel überwiegend oder ausschließlich Anatas-Partikel und/oder Rutil-Partikel. Bevorzugt ist der Anteil von Anatas und/oder Rutil im Ausgangsmaterial >70%, >80%, >90% oder im Bereich von 75-90%, 80-95% oder 90-100%. Vorzugsweise ist der Anteil der TiO₂-Partikel an der Gesamtmenge an Partikeln größer 95%, vorzugsweise größer 98% oder 99%. Die Summe aller Partikel im Ausgangsmaterial entspricht dabei 100%. Bei weiteren Mengenangaben und/oder Verhältnissen bezüglich der Partikel im Ausgangsmaterial, betrifft der Anteil von Anatas und/oder Rutil vorzugsweise dem Anteil den TiO im Ausgangsmaterial entspricht. Das hierin angegebene 'Mengenverhältnis' bezieht sich - soweit nicht anders angegeben - bevorzugt auf die Anzahl der Partikel oder auf das Gewichtsverhältnis.

Das Mengenverhältnis von TiO und ZnO im Ausgangsmaterial ist vorzugsweise 0,5:1, 1:1, 1,5:1, 2:1, 2,5:1 oder 3:1. Das Mengenverhältnis ist dabei auf die Menge (z.B. in g oder kg gemessen) der Partikel, insbesondere Halbleiterpartikel und/oder photokatalytisch aktive Partikel, im Ausgangsmaterial der Beschichtung bezogen. Vorzugsweise stimmt das Mengenverhältnis im Ausgangsmaterial mit dem Mengenverhältnis in der Beschichtung überein.

Unter den TiO-Partikeln wird vorzugsweise die reine Anatas-Form der Partikel verwendet oder alternativ ein Mengenverhältnis der Anatas-Form zur Rutil-Form (und/oder einer anderen TiO-Form als Anatas) bei der die Anatas-Form an der Gesamtmenge der TiO-Partikel im Bereich von 80-95%, 70-85%, 60-75% oder 45-60% beträgt.

Bevorzugt sind die Partikel, insbesondere Halbleiterpartikel und/oder photokatalytisch aktive Partikel, alle oder zumindest teilweise dotiert, wobei insbesondere die Titanoxid-Partikel und/oder die Zinkoxid-Partikel zumindest teilweise dotiert sind. 'Zumindest teilweise dotiert' ist vorzugsweise, dass 100%, mindestens 95%, mindestens 60% oder mindestens 35% der photokatalytisch aktiven Partikel dotiert sind.

Unter "Dotieren" wird das Einbringen von Fremdatomen in ein Grundmaterial verstanden, wobei die eingebrachte Menge dabei sehr klein ist im Vergleich zum Trägermaterial. Typischerweise liegt der Anteil an Fremdatomen zwischen 0,1 und 100 ppm. Die Fremdatome fungieren beispielsweise als Störstellen in den Partikeln, insbesondere in einem Halbleitermaterial, und verändern die Eigenschaften des Ausgangsmaterials, beispielsweise ermöglichen sie das Auftreten eines photovoltaischen Effekts.

Vorzugsweise ist der Schmelzpunkt bzw. die Schmelztemperatur der Partikel höher als 300°C, 400°C, 600°C, 800°C oder 1.200°C. Beispielsweise ist der Schmelzpunkt von Anatas und Rutil 1.855°C.

Vorzugsweise weisen alle oder zumindest ein Teil der Partikel eine oder mehrere der folgenden Eigenschaften auf: die Partikel sind kristallin, die Partikel sind halbleitend, die Partikel sind dotiert. Alternativ oder zusätzliche liegen die Partikel zumindest teilweise in kristalliner Form (z.B. mono- und/oder polykristallin) vor. Vorzugsweise oder alternativ ist oder sind zumindest ein Teil der Partikel photokatalytische Partikel und/oder Halbleiter, insbesondere Halbleiter mit einem Bandabstand, bei dem Photonen im sichtbaren Spektralbereich absorbiert werden. Der Bandabstand kann durch Dotieren eingestellt oder verändert sein. Vorzugsweise oder alternativ sind die kristallinen und/oder halbleitenden Partikel und/oder zumindest ein Teil der photokatalytisch aktiven Partikel dotiert. Beispiele für Dotierstoffe sind Bor, Phosphor, Stickstoff, Arsen, Antimon, Indium, Aluminium, Kobalt, Vanadium. Im Falle von TiO- und/oder ZnO-Partikeln ist der Dotierstoff Kobalt, Stickstoff und/oder Vanadium. Neben den Dotierstoffen weisen die Partikel übliche Verunreinigungen im ppm-Bereich auf, z.B. Metallatom-Spurenstoffe.

Anmerkung: Hierin bezieht sich das 'und/oder' auf alle aus der Logik ableitbaren Kombinationen und Unterkombinationen. Also beispielsweise offenbart A, B und/ oder C die Kombinationen und Unterkombinationen A, B, C, AB, AC, BC und ABC.

Dotierte Halbleiterpartikel sind vorzugsweise photokatalytisch aktiv, also Photokatalysatoren. Unter "Photokatalysator" wird ein Stoff verstanden, der durch die Einstrahlung von Licht als Katalysator fungiert. Bevorzugt sind die Partikel Titanoxid und/oder Zinkoxid- (ZnO-) Partikel. Diese absorbieren insbesondere Licht mit Wellenlängen im Bereich von 315 nm bis 750 nm. Insbesondere ab einer Beleuchtungsstärke von 800 Lux oder 1000 Lux findet ein nachweisbarer photokatalytischer Effekt statt, ohne dass eine zusätzliche Bestrahlung mit UV-Licht stattfindet. Es wurde aber auch festgestellt, dass die photokatalytische Aktivität zur und die Reinigung von Luft von Verunreinigungen bei wesentlich geringeren Beleuchtungsstärken einsetzt, beispielsweise bei einer Beleuchtungsstärke von nur 80 Lux oder sogar darunter - natürlich bei entsprechend verlangsamter Reinigungswirkung bzw. -leistung.

Das Ausgangsmaterial, welches zumindest dotierte oder zumindest teilweise dotierte Partikel, insbesondere Halbleiterpartikel und/oder photokatalytisch aktive Partikel enthält, kann auf der Glasoberfläche aushärten. Das Ausgangsmaterial härtet bevorzugt chemisch und ohne externe Temperaturzufuhr aus. Der Begriff "Aushärtung" umfasst vorteilhaft einen Vorgang des Trocknens, beispielsweise durch Verdunstung flüssiger Inhaltsstoffe, welche das Ausgangsmaterial zum Auftragen der Partikel auf die Glasoberfläche aufweist. Der Begriff "Aushärtung" umfasst weiterhin vorteilhaft eine Vernetzung von Inhaltsstoffen, welche das Ausgangsmaterial aufweist und welche für eine Vernetzung ausgebildet sind.

Bei der Aushärtung findet bevorzugt eine Vernetzung zumindest einer Komponente des Ausgangsmaterials mit der Glasoberfläche auf molekularer Ebene statt, insbesondere eine Bindung zwischen dem Silizium oder dem Siliziumdioxid der Glasoberfläche und dem Zink oder dem Zinkoxid der zumindest teilweise dotierten Zinkoxid-Partikel und/oder dem Titan oder dem Titanoxid der zumindest teilweise dotierten Titanoxid-Partikel. Das Ausgangsmaterial verbindet sich ausschließlich mit Glas. Nach dem Aushärten des Ausgangsmaterials verbleibt eine Beschichtung auf der Glasoberfläche. Diese Beschichtung ist insbesondere abriebfest und verschleißfrei sowie transparent. Die Beschichtung ist säurebeständig und nach dem Aushärten der Beschichtung (siehe unten) auch beständig gegen Basen (alkalische Lösungen) und Alkoholen.

Bevorzugt ist die Glasoberfläche ein Substrat, welches Siliziumdioxid aufweist, insbesondere ein Flachglas, beispielsweise ein Fensterglas, ein Autoglas, eine Glasfassade oder ein Spiegel.

Nach dem Vorbehandeln der Glasoberfläche mit dem alkalischen Reinigungsmittel wird die Glasoberfläche mit Wasser abgespült. Bevorzugt erfolgt das Abspülen mit gereinigtem oder destilliertem oder deionisiertem oder demineralisiertem Wasser. Besonders bevorzugt ist das Wasser zum Reinigen Osmosewasser. Vorzugsweise weist das Wasser eine Leitfähigkeit von 5-20 µS oder 10-80 µS oder eine Reinheit von zumindest 99%, insbesondere zumindest 99,6% auf. Weiter bevorzugt handelt es sich um energetisiertes Wasser.

Bevorzugt erfolgt vor dem Reinigungsschritt mit dem alkalischen Reinigungsmittel kein vorgeschalteter Reinigungsschritt, insbesondere kein Reinigungsschritt unter Verwendung von Tensiden, da dies die Wirksamkeit der Reinigung mit dem alkalischen Reinigungsmittel beeinträchtigt.

Das Ausgangsmaterial weist die zumindest dotierten oder teilweise dotierten Partikel, insbesondere photokatalytisch aktive Partikel und/oder Halbleiterpartikel, bevorzugt in einem flüssigen Dispersionsmedium auf. Die Partikel stellen eine feste, disperse Phase in dem flüssigen Dispersionsmedium dar. Unter "Dispersion" ist ein heterogenes Gemisch aus zumindest zwei Stoffen zu verstehen, die sich nicht oder kaum ineinander lösen oder chemisch miteinander verbinden. Die disperse Phase ist dabei fein verteilt in einem anderen kontinuierlichen Stoff, dem Dispersionsmedium. Das Ausgangsmaterial ist somit vorzugsweise eine Dispersion mit den Halbleiterpartikeln. Das Dispersionsmedium ist beispielsweise Wasser, Ethanol oder Isopropanol.

Das Ausgangsmaterial wird zum Auftragen auf die vorbehandelte Glasoberfläche bevorzugt zerstäubt. Dabei kommt insbesondere ein Sprühverfahren zum Einsatz. Auf diese Weise führt die Aushärtung des Ausgangsmaterials auf der Glasoberfläche zu einer durchgehenden Beschichtung der Glasoberfläche. Das Ausgangsmaterial wird dazu vorzugsweise mit einer Niederdruck-Sprühpistole dünn auf die vorbehandelte Glasscheibe aufgetragen. Bevorzugt wird eine Menge von 0,4-1,8 g/m² oder 0,6-1,2 g/m², von 0,1-2 ml/m², von 2-5 ml/m² oder besonders bevorzugt von 0,3-0,6 ml/m² des Ausgangsmaterials (des Dispersionsmediums) auf die Glasscheibe zum Aushärten aufgetragen.

Das Aushärten des auf die Glasoberfläche aufgetragenen Ausgangsmaterials erfolgt insbesondere bei Raumtemperatur. Eine Aushärtezeit von 12-36 Stunden oder von 20-28 Stunden ist bevorzugt. Diese Aushärtung findet insbesondere bei Raumtemperatur statt, wobei auch höhere oder tiefere Temperaturen möglich sind.

Die resultierende Beschichtung der Glasoberfläche kann vorteilhaft zur photokatalytischen Umsetzung von Luftverunreinigungen wie Pollen, Feinstaub, Ultrafeinstaub, bestimmte organische Moleküle oder Keimen verwendet werden. Dabei werden insbesondere Schadstoffe von der mit Licht bestrahlten Beschichtung angezogen, oxidiert und unschädlich gemacht. Insbesondere erfolgt die photokatalytische Umsetzung bei Bestrahlung der Beschichtung mit Licht, welches Wellenlängen im sichtbaren Bereich oder im Bereich von 315 nm bis 750 nm aufweist. Ab einer Beleuchtungsstärke von 80 Lux, 800 Lux oder 1000 Lux findet ein nachweisbarer Effekt auf eine Konzentration der Luftverunreinigungen statt.

Einzelne Merkmale können in jeglicher Kombination oder Unterkombination miteinander beansprucht werden, Merkmale eines der Verfahren können auch mit Merkmalen der Beschichtung kombiniert werden als Einzelmerkmal oder in beliebiger Unterkombination von Merkmalen. Umgekehrt können Merkmale der Beschichtung mit Merkmalen der Verfahren kombiniert werden. Auch Merkmale der Verfahren können untereinander kombiniert sein als Einzelmerkmal oder in beliebiger Unterkombination von Merkmalen. Soweit dies aus logischen Gründen sich nicht widerspricht oder nicht explizit ausgeschlossen ist, ist hierin jede Einzelangabe bzw. jedes Einzelmerkmal mit jeder anderen Einzelangabe bzw. Einzelmerkmal oder jeder logisch zulässigen Unterkombination von Einzelangaben bzw. -merkmalen kombinierbar.

Anhand von Figuren wird eine Ausführungsform der Erfindung näher erläutert. Es zeigen:
- Fig. 1: einen schematischen Ablauf eines Verfahrens zum Aufbringen einer Beschichtung auf eine Glasoberfläche,
- Fig. 2: eine schematische Darstellung eines Querschnitts eines Glases mit einer beschichteten Glasoberfläche, orthogonal zur Glasoberfläche,
- Fig. 3: eine schematische Darstellung eines weiteren Querschnitts eines Glases mit einer beschichteten Glasoberfläche, orthogonal zur Glasoberfläche, und
- Fig. 4: ein Glas mit einer Beschichtung auf der Glasoberfläche.

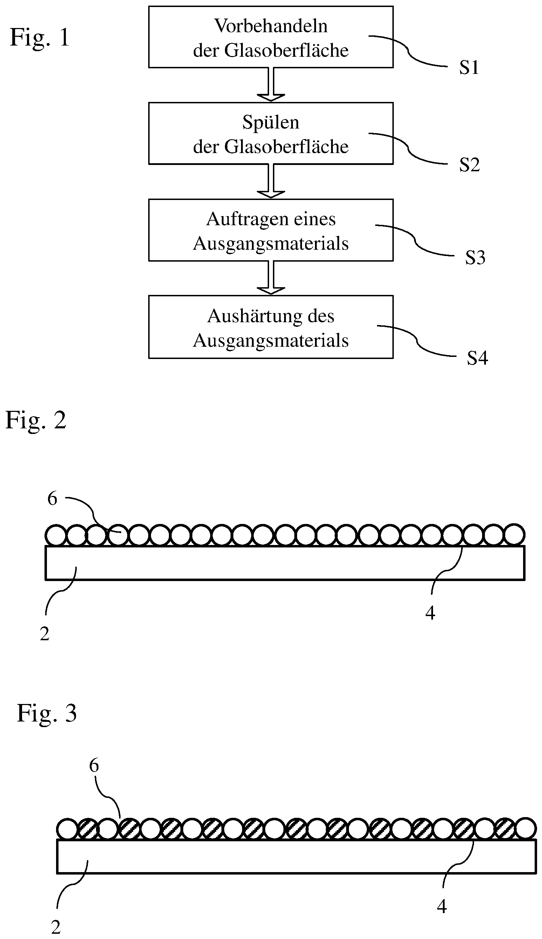

Fig. 1 zeigt schematisch ein Verfahren zum Aufbringen einer Beschichtung auf eine Glasoberfläche aus Siliziumdioxid (SiO₂) oder die einen Anteil an Siliziumdioxid von zumindest 40 Gewichts% oder zumindest 70 Gewichts% aufweist. In einem ersten Verfahrensschritt S1 wird die Glasoberfläche vorbehandelt. Dies geschieht, indem die Glasoberfläche mit Hilfe eins hochalkalischen Reinigungsmittels mit einem pH-Wert über 10 gereinigt wird. Dabei wird die Glasoberfläche für eine spätere Verbindung mit der Beschichtung präpariert. Ein Aufbrechen von SiO-Bindungen begünstigt dabei eine spätere molekulare Bindung mit der Schicht.

In einem zweiten Schritt S2 wird das alkalische Reinigungsmittel zusammen mit Rückständen auf der Oberfläche mit destilliertem Wasser abgespült, das eine Reinheit von über 99,6% hat. Die Leitfähigkeit des Wassers liegt zwischen 5 und 20 µS.

In einem dritten Schritt S3 wird ein Ausgangsmaterial gleichmäßig auf die Glasoberfläche aufgetragen. Das Ausgangsmaterial enthält Partikel, insbesondere dotierte Halbleiterpartikel, wie beispielsweise Zinkoxid (ZnO)-Nanopartikel und/oder Titanoxid-Nanopartikel, welche photokatalytisch aktiv sind. Das Ausgangsmittel ist eine Dispersion, wobei die Partikel die disperse Phase in einem flüssigen Dispersionsmedium sind.

Eine Menge von 0,4 bis 1,8 g/m² des Ausgangsmaterials (in Bezug auf die nichtflüchtigen Bestandteile nach dem Abtrocknen) wird im Sprühverfahren unter Einsatz einer Niederdruck-Sprühpistole auf die Glasoberfläche aufgetragen. Die Glasoberfläche wird dabei gleichmäßig benetzt.

In einem vierten Schritt S4 härtet das Ausgangsmaterial auf der Glasoberfläche zu einer Beschichtung aus. Dies geschieht bei Raumtemperatur und in einem Zeitintervall von 24 Stunden. Das Ausgangsmaterial härtet chemisch aus und geht dabei eine Vernetzung mit der Glasoberfläche auf molekularer Ebene ein. Es entsteht eine abriebfeste, verschleißfreie, säurebeständige, basenbeständige, alkoholbeständige und transparente Beschichtung.

Fig. 2 zeigt eine schematische Darstellung eines Querschnitts eines Glases 2 orthogonal zur Glasoberfläche 4 nach Durchführung eines Verfahrens mit den Schritten S1 bis S4. Das Glas 2 ist ein Silikatglas und hat eine Beschichtung 6 auf der Glasoberfläche 4.

Die Beschichtung 6 enthält Partikel, insbesondere dotierte Halbleiterpartikel einer Art, wie z.B. ZnO, TiO oder SiO-Partikel, welche vorzugsweise in Form von Nanopartikeln vorliegen und besonders bevorzugt als Photokatalysatoren fungieren.

Die Beschichtung 6 ist mit dem Silizium des Glases 2 auf molekularer Ebene vernetzt, wodurch sie abriebfest und verschleißfrei ist. Die Beschichtung 6 ist außerdem transparent und beständig gegenüber Säuren, Basen und Alkoholen.

Unter Lichteinfall, beispielsweise mit einer Bestrahlungsstärke von 80 Lux oder sogar weniger sowie Wellenlängen im Bereich von 315-750 nm, kann die Beschichtung zur Reduzierung von Luftverunreinigungen beitragen, indem sie Schadstoffe wie Pollen, Feinstaub oder Keime anzieht, oxidiert und unschädlich macht.

Die chemische Zusammensetzung und/oder die Größe der Partikel, insbesondere der photokatalytische aktiven Partikel und/oder der Halbleiterpartikel, sind hierin bereits an anderen Stellen unten und oben beschrieben, so dass vollumfänglich dorthin verwiesen wird. Vorzugsweise liegen die Partikel zumindest teilweise in kristalliner Form (z.B. mono- und/oder polykristallin) vor. Vorzugsweise oder alternativ ist zumindest ein Teil der Partikel Halbleiter, insbesondere Halbleiter mit einem Bandabstand, bei dem Photonen im sichtbaren Spektralbereich absorbiert werden. Vorzugsweise oder alternativ sind die kristallinen und/oder halbleitenden Partikel oder zumindest ein Teil der Partikel dotiert. Beispiele für Dotierstoffe sind Bor, Phosphor, Stickstoff, Arsen, Antimon, Indium, Aluminium.

Fig. 3 zeigt eine schematische Darstellung eines weiteren Querschnitts eines Glases 2 orthogonal zur Glasoberfläche 4 nach Durchführung eines Verfahrens mit den Schritten S1 bis S4. Die Beschichtung 6 der Fig. 3 unterscheidet sich von der Beschichtung 6 der Fig. 2 nur dadurch, dass die Beschichtung zwei verschiedene Partikelarten, insbesondere dotierte Halbleiterpartikel, aufweist (in Fig. 3 durch schraffierte und nichtschraffierte Partikel gekennzeichnet). Die schraffierten Partikel sind vorzugsweise TiO und die nicht-schraffierten Partikel ZnO. Weitere Kombinationen können z.B. TiO und SiO oder ZnO und SiO sein. Das Mengenverhältnis von TiO zu ZnO kann beispielsweise 1:1 sein, ist aber vorzugsweise 2:1.

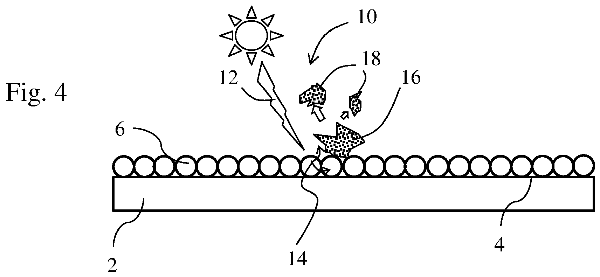

Fig. 4 zeigt ein Glas mit einer Beschichtung auf der Glasoberfläche, wobei die Beschichtung 6 photokatalytisch aktive Partikel aufweist. Die photokatalytisch aktiven Partikel weisen vorzugsweise im Vergleich mit den Schmelztemperaturen des beschichteten Glases wesentlich höhere Schmelz- bzw. Reaktionstemperatur auf. Beispielsweise ist die Schmelztemperatur der photokatalytisch aktiven Partikel höher als 300°C, 400°C, 600°C oder 800°C. Beispielsweise ist der Schmelzpunkt von Anatas und Rutil 1.855°C.

Beispielhaft ist in Fig. 4 der photokatalytische Effekt 10 dargestellt. Das Glas 2 ist ein Silikatglas und hat eine Beschichtung 6 auf der Glasoberfläche 4. Die Beschichtung 6 enthält photokatalytisch aktive Partikel. Ein Photon 12 trifft auf ein Partikel, das sich an der Oberfläche der Beschichtung 6 oder oberflächennah befindet. Das Photon 22 induziert am Partikel ein Ladungspaar 14, beispielsweise in Form eines Elektrons und Lochs oder eines Radikals. Das Elektron oder das Radikal wirkt chemisch auf eine an der Oberfläche der Beschichtung (zumindest temporär) anhaftende Verunreinigung 16 (wie beispielsweise eine Zelle oder Bakterie). Die Einwirkung des Radikals/Elektrons führt zu einer Zerstörung bzw. Inaktivierung der Verunreinigung, beispielsweise zu einer chemischen Umsetzung. Bei organischen Molekülen als Verunreinigung können diese beispielsweise in CO₂ und H₂O und ggf. weitere Moleküle als Zersetzungsprodukte 18 mit niedrigerer Anzahl an Atomen umgesetzt werden.

### Beispiele für das Beschichtungsverfahren und die daraus resultierende Beschichtung

Es wurde handelsübliches (unbeschichtetes) Fensterglas (Flachglas) mit einer Ammoniak-Lösung mit einem pH-Wert von 11 gereinigt bzw. angeätzt.

Nach dem Auftragen des alkalischen Lösungsmittels wird dieses mit einer Gummilippe abgezogen und anschließend mit Papier (handelsüblicher Saugkrepp) trockenpoliert.

Nach der Behandlung mit der alkalischen Lösung und dessen Abtrocknen wird der alkalische Reiniger noch weiter entfernt durch eine Nachreinigung mit deionisiertem Wasser (Osmosewasser) mit einer Leitfähigkeit von 20 Mikrosiemens. Das deionisierte Wasser hinterlässt keine Rückstände an der angeätzten Oberfläche.

Nach dem Trocknen der gereinigten Scheibe an Luft wurde eine Suspension auf das Fensterglas aufgetragen. Die Suspension enthielt pro 1000 cm³ (1 Liter) 12 gr TiO₂-Anatas-Partikel und 6 gr ZnO₂-Partikel. Die Partikelgröße bei beiden Partikeln lag im Bereich von 300 bis 700 nm mit dem Maximum der Partikelverteilung um 550 nm. Die Anataspartikel waren Stickstoff-dotiert mit einem Anteil von 2 - 8% Stickstoffatomen zu TiO₂-Molekülen in den Anataspartikeln. Die ZnO₂-Partikel waren dotiert mit Kobalt mit einem Ko/Zn-Verhältnis von 1-3%. Der Träger der Suspension ist Isopropanol in p.A. Qualität.

Pro Quadratmeter Glasoberfläche wurde ein dünner Film von ca. 0,3 - 0,6 ml der TiO₂/ZnO₂-Suspension aufgetragen, so dass pro Quadratmeter Glasfläche das Partikel-Flächengewicht nach dem Abtrocknen des Suspensionsträgers bei ca. 5-10 mg/m³ liegt.

Durch Lagerung an Umgebungsluft über eine Zeit von 24 h wurde die Beschichtung abgetrocknet ohne zusätzliches Aufheizen (Raumtemperatur 18°C und Luftzirkulation bei gekipptem Fenster).

Parallel zur Beschichtung eines bereits eingebauten Zimmerfensters wurden 30 cm x 30 cm Glasplatten aus dem gleichen Glasmaterial wie oben angegeben gereinigt und beschichtet. Diese Glasplatten wurden einer Prüfanstalt übergeben zusammen mit Referenz-Glasplatten aus dem gleichen Glasmaterial, jedoch ohne die beschriebene Reinigung und Beschichtung. Die Prüfanstalt hat die sterilen, beschichteten und die sterilen, unbeschichteten Glasplatten mit einer bakteriellen Keimsuspension von 10⁷ Keimen/ml beschichtet. Nach der Beschichtung mit den Keimen wurden die beschichteten und unbeschichteten Glasplatten mit einer 70 W HQL-Lampe mit Tageslicht unter Verwendung eines UV-Filters belichtet bzw. beleuchtet und die zeitliche Entwicklung der Keimzahl durch Probenahme mit Abklatschplatten der Firma VWR bestimmt.

Dabei wurde festgestellt, dass schon nach einer Stunde auf den beschichteten Glasplatten keine Keime mehr nachweisbar waren, während bei den unbeschichteten und unbehandelten Glasplatten keine Abnahme der Keime festgestellt werden konnte.

Von einer weiteren Prüfanstalt wurde die zeitliche Reduktion der Feinstaubdichte in zwei Messkammern gemessen, wobei die Wände der einen Kammer aus beschichteten Probescheiben und die Wände der anderen Kammer aus unbeschichteten Probescheiben bestanden.

In die Messkammern wurde Fein- und Ultrafeinstaub eingeleitet, der als Abgas eines Stromaggregats (Endress Ecopower Line ESE 200 BS) erzeugt wurde. Ausgangsseitig wurde an den Kammern die austretende Feinstaubkonzentration mit einem Condensation Particle Counter (Grimm Aerosol Technik Modell 5.416) gemessen.

Die Wände wurden mit ca. 5.800 Lux beleuchtet. Es wurde festgestellt, dass nach 30 min die Partikeldichte in der mit beschichteten Scheiben 48% geringer war als bei der Kammer mit den unbeschichteten Scheiben. Nach 90 min war in der Kammer mit den beschichteten Scheiben die Partikeldichte 79% geringer als in der Kammer mit den unbeschichteten Scheiben.

In weiteren Versuchen wurde die pH-10 Ammoniak-Lösung durch eine Natronlauge mit pH 10,5 ersetzt und die Reinigung und Beschichtung bei ansonsten gleichen Reinigungs- und Beschichtungsbedingungen bzw. -schritten durchgeführt. Auch hier wurde der photokatalytische Effekt mit der Reduktion von Schimmel- und Hefesporen auf den beschichteten Glasplatten gegenüber den Sporen auf den unbeschichteten Glasplatten nachgewiesen.

Die Beschichtungen auf den Glasplatten wurden nach einer längeren Aushärtungsphase von 4 Tagen mit auf dem Markt üblichen Fensterreinigungsmitteln gereinigt, wie beispielsweise Lösungsmittelhaltigen (Spiritus) oder kalklösenden (Bad-) Reinigungsmitteln oder mit Fahrzeugscheibenreinigern (zum Ablösen von Fliegen- und Teerresten). Weitere Reinigungen wurde mit alkalischen Reinigern wie verdünnter Ammoniaklösung durchgeführt. Es konnte bei diesen Versuchen keine Abnahme der photokatalytischen Aktivität der beschichteten Probescheiben in Hinsicht auf die Verringerung der Sporendichte, die Abnahme der Feinstäube und Keimzahl festgestellt werden.

### Bezugszeichenliste:

- S1: erster Schritt
- S2: zweiter Schritt
- S3: dritter Schritt
- S4: vierter Schritt
- 2: Glas
- 4: Glasoberfläche
- 6: Beschichtung
- 10: photokatalytischer Effekt
- 12: Photon
- 14: Ladungspaar
- 16: Verunreinigung
- 18: Zersetzungsprodukt

## Patentansprüche

1. Beschichtung (6) auf einer Glasoberfläche (4), insbesondere zur photokatalytischen Umsetzung von Luftverunreinigungen, wobei die Beschichtung (6) aus einem Ausgangsmaterial, das zumindest dotierte oder zumindest teilweise dotierte Partikel, insbesondere Halbleiterpartikel und/oder photokatalytische aktive Partikel, enthält, gebildet ist, und wobei die Beschichtung (6) durch Vernetzung der Partikel mit dem Silizium oder dem Siliziumdioxid der Glasoberfläche mit der Glasoberfläche (4) auf molekularer Ebene verbunden ist.

2. Beschichtung nach 1, wobei die Partikel ZnO und/oder TiO und/oder SiO sind oder aufweisen, wobei insbesondere die TiO Partikel Anatas-Partikel und/oder Rutil-Partikel sind, und/oder wobei insbesondere der Schmelzpunkt bzw. die Schmelztemperatur der Partikel höher ist als 300°C, 400°C, 600°C, 800°C oder 1200°C.

3. Beschichtung nach Anspruch 2, wobei das Mengenverhältnis von TiO und ZnO im Ausgangsmaterial 0,5:1, 1:1, 1,5:1, 2:1, 2,5:1 oder 3:1 ist.

4. Beschichtung nach einem der vorstehenden Ansprüche, wobei die Partikel in Form von Nanopartikeln vorliegen.

5. Verfahren zum Aufbringen einer Beschichtung (6) auf eine Glasoberfläche (4), wobei das Verfahren aufweist:
Vorbehandeln (S1) der Glasoberfläche (4) mit einem alkalischen Reinigungsmittel, welches insbesondere einen pH-Wert von zumindest 9 aufweist;
Spülen (S2) der Glasoberfläche (4) mit Wasser;
Auftragen (S3) eines Ausgangsmaterials, das zumindest dotierte oder zumindest teilweise dotierte Partikel, insbesondere Halbleiterpartikel und/oder photokatalytisch aktive Partikel, enthält, auf die Glasoberfläche (4);
Aushärtung (S4) des Ausgangsmaterials auf der Glasoberfläche (4) zu einer Beschichtung (6).

6. Verfahren nach Anspruch 5, wobei die Glasoberfläche (4) eine Oberfläche eines Glases (2) ist, das zumindest Siliziumdioxid aufweist, insbesondere eines Fensterglases.

7. Verfahren nach Anspruch 5 oder 6, wobei das Wasser zum Spülen (S2) der Glasoberfläche (4) eine Leitfähigkeit zwischen 5 µS und 20 µS oder zwischen 10 µS und 80 µS oder eine Reinheit von zumindest 99% aufweist.

8. Verfahren nach einem der Ansprüche 5 bis 7, wobei das Ausgangsmaterial die Partikel in einem flüssigen Dispersionsmedium aufweist.

9. Verfahren nach einem der Ansprüche 5 bis 8, wobei die Partikel in Form von Nanopartikeln vorliegen.

10. Verfahren nach einem der Ansprüche 5 bis 9, wobei die Partikel ZnO und/oder TiO und/oder SiO sind oder aufweisen, wobei insbesondere die TiO Partikel Anatas-Partikel und/oder Rutil-Partikel sind, und/oder wobei insbesondere der Schmelzpunkt bzw. die Schmelztemperatur der Partikel höher ist als 300°C, 400°C, 600°C, 800°C oder 1200°C.

11. Verfahren nach einem der Ansprüche 5 bis 10,
wobei der Schritt des Auftragens (S3) des Ausgangsmaterials auf die Glasoberfläche (4) aufweist:
dass das Ausgangsmaterial im Sprühverfahren auf die Glasoberfläche (4) aufgetragen wird, und/oder
dass eine Masse des Ausgangsmaterials von 0,4 g/m² bis 1,8 g/m² auf die Glasoberfläche (4) aufgetragen wird, und/oder
wobei der Schritt des Aushärtens (S4) des Ausgangsmaterials auf die Glasoberfläche (4) bei Raumtemperatur abläuft und nach einem Zeitraum zwischen 12 und 36 Stunden oder zwischen 20 und 28 Stunden abgeschlossen ist.

12. Beschichtung nach einem der Ansprüche 1 bis 4 oder Verfahren nach einem der Ansprüche 5 bis 11, wobei die photokatalytisch aktiven Partikel dotiert sind mit Stickstoff, Antimon, Indium, Aluminium, Kobalt und/oder Vanadium, wobei insbesondere die TiO- und/oder ZnO-Partikel dotiert sind mit Kobalt, Stickstoff und/oder Vanadium.

13. Verwendung einer beschichteten Glasoberfläche (4), die nach einem Verfahren gemäß einem der Ansprüche 5 bis 12 hergestellt ist, zur photokatalytischen Umsetzung von Luftverunreinigungen, insbesondere durch Bestrahlung mit Licht, welches eine Beleuchtungsstärke von beispielsweise zumindest 80 Lux sowie Wellenlängen im Bereich von 315 nm bis 750 nm aufweist.

14. Beschichtung, die nach einem Verfahren gemäß einem der vorhergehenden Ansprüche 5 bis 12 aufgebracht wurde.

15. Glas mit einer Beschichtung, die nach einem Verfahren gemäß einem der vorhergehenden Ansprüche 5 bis 12 aufgebracht wurde.
